# EUROPEAN PATENT APPLICATION

(11) **EP 2 003 182 A2**
(43) Date of publication of application: **17.12.2008**
(21) Application number: 06730825.4
(22) Date of filing: 31.03.2006
(51) Int. Cl.: C09K 5/00

(54) **COOLANT COMPOSITION**

(71) Applicant: Shishiai-Kabushikigaisha, Seki-shi, Gifu 501-3923 (JP)
(72) Inventor: MORI, Yasuaki, Seki-shi, Gifu 501-3923 (JP); SAKAIDA, Shimizu, Seki-shi, Gifu 501-3923 (JP)
(74) Representative: Davies, Gregory Mark
(86) International application number: PCT/JP2006/306877
(87) International publication number: WO 2007/116478

(57) **Abstract**

The present invention relates to a coolant composition having an excellent corrosion control function, mainly for metals which form cooling systems for internal combustion engines and the like, particularly aluminum or aluminum alloys, where the excellent corrosion control function for aluminum or aluminum alloys is not deteriorated even when mixed with a cooling composition containing another component, and is **characterized by** having a glycol as a base and containing (a) 0.05 to 0.5 mass % of silicic acid or an alkali metal salt thereof; (b) 0.5 to 5 mass % of p-tert-butyl benzoic acid or an alkali metal salt thereof; (c) 0.1 to 0.8 mass % of sebacic acid or an alkali metal salt thereof; (d) 0.001 to 0.5 mass % of at least one type selected from among strontium compounds, magnesium compounds and calcium compounds; and (e) 0.05 to 1.0 mass % of a triazole.

## Description

### Technical Field

The present invention relates to a coolant composition having an excellent corrosion control function for mainly metals constituting cooling systems of internal combustion engines, etc., especially aluminum or aluminum alloys. In particular, the invention relates to a coolant composition of which the excellent corrosion control function for aluminum or aluminum alloys does not suffer any deteriorated even in the case where a coolant composition containing a phosphate and a coolant composition not containing a phosphate are mixed for use.

### Background Technology

Many coolant compositions containing a phosphate which is excellent in corrosion resistance to iron and aluminum are adopted as conventional coolant compositions used for mainly cooling systems of internal combustion engines, etc..

However, phosphates react with hard water components, which are included in the coolant composition, and cause precipitation. As a result, the corrosion control function is deteriorated, and in addition, the deposition of such precipitation causes trouble, such that the circulation path or the like of the cooling system becomes clogged.

Under such circumstances, coolant compositions not containing a phosphate have recently been proposed. For example, some coolant compositions proposed by the present applicant are characterized by containing at least one of sebacic acid or alkali metal salt thereof, and p-tert-butylbenzoic acid or an alkali metal salt thereof (see Patent Document 1).

These coolant compositions do not contain a phosphate, and therefore, there is no risk of causing any of the various problems described above.

Under such circumstances, coolant compositions containing a phosphate and coolant compositions not containing a phosphate are both sold on the market, and in many cases, general users do not know the composition of the coolant they use, and therefore, a coolant composition containing a phosphate and a coolant composition not containing a phosphate are mixed for use when the coolant composition is changed or refilled, thus causing a new problem.

This problem is that the corrosion control function of the cooling system, especially the aluminum material, is significantly deteriorated in the case where a coolant composition containing a phosphate and a coolant composition not containing a phosphate are mixed for use.

In order to achieve the object of solving this problem, the present applicant has proposed a coolant composition of which the corrosion control function of the cooling system, in particular the aluminum material, is maintained even, in the case where a coolant composition containing a phosphate and a cooling composition not containing a phosphate are mixed for use (see Patent Document 2).
Patent Document 1: Japanese Patent No. 2772578
Patent Document 2: Japanese Unexamined Patent Publication No. H6 (1994)-166867

### Disclosure of the Invention

### Problem to Be Solved by the Invention

An object of the present invention is to provide a coolant composition gained by further improving the above described coolant composition proposed by the present applicant, which is excellent in its corrosion control function for aluminum or aluminum alloys, and where the corrosion control function for aluminum or aluminum alloys is maintained even in the case where a coolant composition containing a phosphate and a coolant composition not containing a phosphate are mixed for use.

### Means for Solving Problem

In order to achieve the above described object, the gist of the invention according to Claim 1 is a coolant composition having a glycol as a base, characterized by containing:
(a) 0.05 to 0.5 mass % of silicic acid or alkali metal salt thereof;
(b) 0.5 to 5 mass % of p-tert-butylbenzoic acid or alkali metal salt thereof;
(c) 0.1 to 0.8 mass % of sebacic acid or alkali metal salt thereof;
(d) 0. 001 to 0.5 mass % of at least one type selected from among strontium compounds, magnesium compounds and calcium compounds; and
(e) 0.05 to 1.0 mass % of any of triazoles.

The gist of the invention according to Claim 2 is the coolant composition according to Claim 1, characterized by containing at least one type from among benzoates, toluates, nitrates, molybdates and thiazoles in the base.

The gist of the invention according to Claim 3 is the coolant composition according to either Claim 1 or 2, characterized by containing no phosphate, amine salt or nitrite in the base.

### Effects of the Invention

By virtue of having the above described configuration, the invention according to Claims 1 and 2 has an excellent corrosion control function for aluminum or aluminum alloys constituting the cooling system, and the corrosion control function for aluminum or aluminum alloys is maintained even in the case where a coolant composition containing a phosphate and a coolant composition not containing a phosphate are mixed for use, and therefore, there is little risk of the corrosion control function for aluminum and aluminum alloys being deteriorated when a general user changes the coolant or refills the system with the coolant composition.

In addition, the invention according to Claims 1 and 2 does not react with hard water components, and thus do not cause precipitation, and accordingly, there is no concern of any such trouble as the circulation path or the like becoming clogged being caused when used in a cooling system.

In addition, the invention according to Claim 3 does not contain a phosphate, amine salt or nitrite in the base, and therefore, the coolant composition does not react with hard water components or cause precipitation, and therefore, no nitrosoamine, which is a carcinogenic substance, is generated.

### Best Mode for Carrying Out the Invention

In the following, the coolant composition according to the present invention (hereinafter simply referred to as composition) is described in further detail. The composition according to the present invention has a glycol as a base. As the glycol, one type or a mixture of two or more types selected from among ethylene glycol, diethylene glycol, triethylene glycol, propylene glycol, 1,3-propanediol, 1,3-butanediol, 1,5-pentanediol, hexylene glycol, ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether can be cited as examples.

The composition according to the present invention is characterized by containing (a) silicic acid or alkali metal salt thereof, (b) p-tert butylbenzoic acid or an alkali metal salt thereof, (c) sebacic acid or alkali metal salt thereof, (d) at least one type selected from among strontium compounds, magnesium compounds and calcium compounds, and (e) any of triazoles.

The component (a) is one type selected from silicic acid and alkali metal salts, such as sodium salt or potassium salt, thereof, and has an excellent corrosion control function for the metals constituting the cooling system in the coolant, in particular for iron based metals and aluminum or aluminum alloys. This component (a) is included with a ratio of 0.05 to 0.5 mass % in the above described base. In the case where the content of the component (a) is less than 0.05 mass %, the above described working effects cannot be sufficiently gained, while in the case where the content of the component (a) exceeds 0.5 mass %, improvement cannot be expected for the excessive part, in terms of the effects, and the composition ends up being uneconomical.

The component (b) is one type selected from p-tert butylbenzoic acid and alkali metal salts, such as sodium salt or potassium salt, thereof, and has an excellent corrosion control function for the metals constituting the cooling system in the coolant, in particular for iron based metals and aluminum or aluminum alloys. In addition, this component (b) works to significantly improve the hard water stabilizing function of the below described component (c) when used together with the component (c). This component (b) is included in the above described base with a ratio of 0.5 to 5 mass %. In the case where the content of the component (b) is less than 0.5 mass %, the above described working effects cannot be sufficiently gained, while in the case where the content of the component (b) exceeds 5 mass %, improvement cannot be expected for the excessive part, in terms of the effects, and the composition ends up being uneconomical.

The component (c) is one type selected from among sebacic acid and alkali metal salts, such as sodium salt or potassium salt, thereof, and has an excellent corrosion control function for the metals constituting the cooling system in the coolant, in particular for iron based metals and aluminum or aluminum alloys. In addition, this component (c) dissolves hard,water components included in the coolant and works to prevent precipitation from being caused from the hard water components and other components in the coolant. In addition, the hard water stabilizing function of this component (c) improves dramatically when used together with the above described component (b) in the coolant. This component (c) is included in the above described base with a ratio of 0.1 to 0.8 mass %. In the case where the content of the component (c) is less than 0.1 mass %, the above described working effects cannot be sufficiently gained, while in the case where the content of the component (c) exceeds 0.8 mass %, improvement cannot be expected for the excessive part, in terms of the effects, and the composition ends up being uneconomical.

Next, the component (d) is described. The component (d) has an excellent corrosion control function for the metals constituting the cooling system in the coolant, in particular for iron based metals and aluminum or aluminum alloys, and is at least one type selected from among strontium compounds, magnesium compounds, and calcium compounds.

Concretely, strontium oxide, strontium hydroxide, strontium chloride, strontium fluoride, strontium iodide, strontium sulfate, strontium nitrate, strontium titanate, strontium borate, strontium tungstate, strontium formate, strontium acetate, strontium propionate, strontium butyrate, strontium valerate, strontium laurate, strontium stearate, strontium oleate, strontium glutamate, strontium lactate, strontium succinate, strontium malate, strontium tartrate, strontium maleate, strontium citrate, strontium oxalate, strontium malonate, strontium sebacate, strontium benzoate, strontium phthalate, strontium salicylate and strontium mandelate can be cited as examples of the strontium compound. From among the above described strontium compounds, strontium nitrate and strontium sulfate are preferable, in that they are excellent in terms of the corrosion control function, easy to handle and highly available.

Concretely, inorganic magnesium compounds, such as magnesium oxide, magnesium chloride, magnesium hydroxide, magnesium carbonate, magnesium nitrate, magnesium sulfate, magnesium titanate, magnesium tungstate, magnesium chromate, magnesium permanganate, magnesium fluoride and magnesium iodide, and organic magnesium compounds, such as magnesium formate, magnesium acetate, magnesium propionate, magnesium butyrate, magnesium valerate, magnesium laurate, magnesium stearate, magnesium oleate, magnesium glutamate, magnesium lactate, magnesium succinate, magnesium malate, magnesium tartrate, magnesium hydrogen tartrate, magnesium maleate, magnesium citrate, magnesium oxalate, magnesium malonate, magnesium sebacate, magnesium benzoate, magnesium phthalate, magnesium salicylate and magnesium mandelate can be cited as examples of the magnesium compound.

Concretely, calcium formate, calcium acetate, calcium propionate, calcium butyrate, calcium valerate, calcium laurate, calcium stearate, calcium oleate, calcium glutamate, calcium lactate, calcium succinate, calcium malate, calcium tartrate, calcium maleate, calcium citrate, calcium oxalate, calcium malonate, calcium sebacate, calcium benzoate, calcium phthalate, calcium salicylate, calcium mandelate, calcium oxide, calcium hydroxide, calcium permanganate, calcium chromate, calcium fluoride, calcium iodide, calcium carbonate, calcium nitrate, calcium sulfate, calcium titanate and calcium tungstate can be cited as examples of the calcium compound.

This component (d) is included in the above described base with a ratio of 0.001 to 0.5 mass %. In the case where the content of the component (d) is less than 0.001 mass %, the above described working effects cannot be sufficiently gained, while in the case where the content of the component (c) exceeds 0.5 mass %, improvement cannot be expected for the excessive part, in terms of the effects, and the composition ends up being uneconomical.

The component (e) is a triazole, and as this triazole, benzotriazole, tolyltriazole, 4-phenyl-1, 2,3-triazole, 2-naphthotriazole and 4-nitrobenzotriazole can be cited, and from among these, benzotriazole and tolyltriazole are especially desirable.

The component (e) has an excellent corrosion control function for copper based metals, such as brass and copper, constituting the cooling system. The content of this component (e) is in a range from 0.05 to 1.0 mass %. This is because in the case where the content of the component (e) is below this range, sufficient corrosion control effects cannot be gained, while in the case where the content of the component (e) is above this range, improvement cannot be expected for the excessive part, in terms of the effects, and the composition ends up bering uneconomical.

In addition, the composition according to the present invention may contain at least one type from among benzoates, toluates, nitrates, molybdates and thiazoles, in addition to the above described components. These components have an excellent corrosion control function for iron based metals, aluminum or aluminum alloys, and copper based metals, such as brass and copper, constituting the cooling system, and the corrosion control function for the metal constituting the cooling system can further be improved when these components are used together with the above described components (a) to (e).

In addition, it is desirable for the composition according to the present invention not to contain phosphate, amine salt or nitrite in the base. As no phosphate, amine salt or nitrite is contained in the base, hard water components do not react and generate precipitation, or generate nitrosoamine, which is a carcinogenic substance.

### Example

Though in the following, an example of the present invention is described in detail, this is illustrative, and the present invention is not limited by this example. Table 1 below shows the composites in each composition of the example of the present invention, Comparative Examples 1 to 3, and a commercially available product A containing a phosphate. A corrosion test was conducted on the heat transfer surface of aluminum for each composition of the example, Comparative Examples 1 to 3 and the commercially available product A shown in Table 1, and a corrosion test was also conducted on the heat transfer surface of aluminum when each composition of the example and Comparative Examples 1 to 3 and the composition of commercially available product A were mixed for use, and the results of these tests are shown in Table 2. Here, a corrosion test was conducted on the heat transfer surface of aluminum in conformity with ASTM D4340-96 (corrosion of cast aluminum alloy in engine coolant under heat-rejecting conditions).

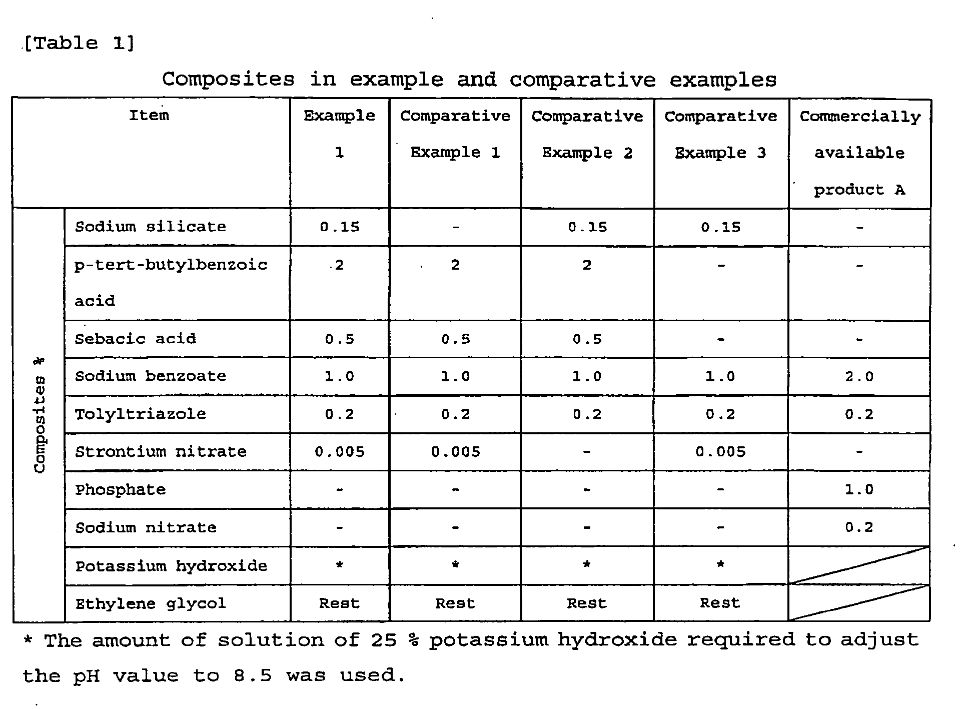

**[Table 2]**

| Results of test on heat transfer surface of aluminum | | |
|---|---|---|
| Sample | Results of test on single product | Results of test when mixed with commercially available product for use* |
| Example 1 | 0.0 | 0.1 |
| Comparative Example 1 | 0.5 | 1.0 |
| Comparative Example 2 | 0.2 | 1.3 |
| Comparative Example 3 | 0.7 | 1.5 |
| Commercially available product A | 0.5 | - |

| | | |
|---|---|---|
| * The example and comparative examples were mixed with commercially available product A with a ratio of 3 : 1 for the tests. | | |

It can be seen from the results of aluminum corrosion tests on the heat transfer surface for each composition of the example, Comparative Examples 1 to 3 and commercially available product A in Table 2 that the amount of corrosion for commercially available product A containing a phosphate was 0.5 mg/cm², the amount of corrosion for Comparative Example 3 containing sodium silicate, sodium benzoate and strontium nitrate was 0.7 mg/cm², the amount of corrosion for Comparative Example 1 containing sebacic acid and p-tert-butyl benzoate, which is conventional and said to be excellent in terms of the effects of corrosion control for aluminum or aluminum alloys, was 0.5 mg/cm², and the amount of corrosion for Comparative Example 2 containing sodium silicate was 0.2 mg/cm², while the amount of corrosion for the composition of the example was 0.0 mg/cm², and thus, it can be confirmed that the composition of the example of the present invention is excellent in terms of the effects of corrosion control of aluminum or aluminum alloys.

In addition, it can be seen from Table 2 that the amount of corrosion for Comparative Example 3 was 1.5 mg/cm², the amount of corrosion for Comparative Example 2 was 1.3 mg/cm², and the amount of corrosion for Comparative Example 3 was 1.0 mg/cm², while the amount of corrosion for the composition of the example of the present invention was 0.1 mg/cm², when each composition of the example and Comparative Examples 1 to 3 and the composition of commercially available product A containing a phosphate were mixed, and thus, it can be confirmed that in the case of the composition of the present invention, the corrosion control function for aluminum was not deteriorated, and maintained even when mixed with the composition of commercially available product A containing a phosphate for use.

### Industrial Applicability

The invention can be applied mainly in cooling systems of internal combustion engines and the like and provide an excellent corrosion control function for the aluminum or aluminum alloy constituting the cooling system, and in addition, the corrosion control function for aluminum or aluminum alloys is maintained even when a coolant composition containing a phosphate and a coolant composition not containing a phosphate are mixed for use, and therefore, there is little risk of the corrosion control function for aluminum or aluminum alloys being deteriorated even when a general user changes the coolant or refills the system with the coolant composition.

## Claims

1. A coolant composition having a glycol as a base, **characterized by** containing:
(a) 0.05 to 0.5 mass % of silicic acid or alkali metal salt thereof;
(b) 0.5 to 5 mass % of p-tert-butylbenzoic acid or alkali metal salt thereof;
(c) 0.1 to 0.8 mass % of sebacic acid or alkali metal salt thereof;
(d) 0.001 to 0.5 mass % of at least one type selected from among strontium compounds, magnesium compounds and calcium compounds; and
(e) 0.05 to 1.0 mass % of any of triazoles.

2. The coolant composition of Claim 1, **characterized by** containing at least one type from among benzoates, toluates, nitrates, molybdates and thiazoles in the base.

3. The coolant composition of either Claim 1 or 2, **characterized by** containing no phosphate, amine salt or nitrite in the base.
